# FASCICULE DE BREVET EUROPEEN

(11) **EP 3 170 744 B1**
(45) Date de publication et mention de la délivrance du brevet: **01.04.2020**
(21) Numéro de dépôt: 16197906.7
(22) Date de dépôt: 09.11.2016
(51) Int. Cl.: B64C 27/22, B64C 27/32, G05D 1/08, B64C 27/26, B64C 13/04, B64C 13/30

(54) **SYSTÈME DE COMMANDE DE VOL ADAPTATIVE POUR LES COMMANDES DE VOL EN LACET ET DE POUSSÉE D'UN HÉLICOPTÈRE HYBRIDE**
ADAPTIVES FLUGSTEUERUNGSSYSTEM FÜR DIE FLUGSTEUERUNGEN BEIM GIEREN UND ZUM SCHUB EINES HYBRIDHELIKOPTERS
AN ADAPTIVE FLIGHT CONTROL SYSTEM FOR THE YAW AND THRUST FLIGHT CONTROLS OF A HYBRID HELICOPTER

(30) Priorité: 20.11.2015 FR 1502432
(43) Date de publication de la demande: 24.05.2017
(73) Titulaire: Airbus Helicopters, 13725 Marignane Cedex (FR)
(72) Inventeur: BIHEL, Jean-Romain, 13740 Le Rove (FR); GROLL, Arnaud, 13480 Calas (FR); BIEST, Romuald, 84360 Lauris (FR); SASSI, Zouhair, 13013 Marseille (FR)
(74) Mandataire: GPI & Associés

(56) Documents cités:
- FR-A1- 2 476 013
- US-A- 2 620 772
- US-A- 2 940 332

## Description

La présente invention est du domaine des commandes de vol des aéronefs. Elle concerne un système de commande de vol adaptative pour un aéronef et un aéronef équipé d'un tel système de commande de vol adaptative.

Plus particulièrement, la présente invention est destinée à un hélicoptère hybride et concerne un système de commande de vol adaptative pour le pilotage du pas des pales des hélices propulsives de cet hélicoptère hybride.

On entend par « hélicoptère hybride » un aéronef qui allie l'efficacité du vol vertical d'un aéronef à voilure tournante conventionnel aux performances à grande vitesse de déplacement permises par l'utilisation d'hélices propulsives.

Un aéronef à voilure tournante conventionnel comporte un fuselage et au moins un rotor principal entraîné en rotation par une motorisation de l'aéronef et assurant à la fois la sustentation et la propulsion dans le cas d'un giravion de type hélicoptère. Un tel aéronef comporte généralement un dispositif anticouple qui s'oppose au couple rotor dû à la réaction du rotor principal de l'aéronef au couple moteur utilisé pour mettre en rotation ce rotor principal. Ce couple rotor a en effet tendance à faire tourner le fuselage de l'aéronef en lacet en sens inverse de celui du rotor principal. Le dispositif anticouple permet également de piloter l'aéronef autour de son axe de lacet, qui est sensiblement parallèle à l'axe de rotation du rotor principal.

Un dispositif anticouple est souvent constitué par un rotor auxiliaire situé généralement à l'arrière de l'aéronef, à l'extrémité d'une poutre de queue de l'aéronef et entraîné en rotation par la motorisation de l'aéronef par l'intermédiaire d'une chaîne de transmission mécanique auxiliaire de puissance.

Un hélicoptère hybride comporte un fuselage et un rotor principal entraîné en rotation par une motorisation de l'hélicoptère hybride. De plus, l'hélicoptère hybride est pourvu d'une aile composée de deux demi-ailes et de deux hélices propulsives placées de part et d'autre du fuselage, par exemple sur les demi-ailes. Les hélices propulsives sont entraînées en rotation par la motorisation de l'hélicoptère hybride.

Le rotor principal est destiné à assurer la totalité de la portance de l'hélicoptère hybride pendant les phases de décollage, d'atterrissage et de vol vertical, puis en général partiellement pendant le vol de croisière, l'aile contribuant alors pour partie à la portance de l'hélicoptère hybride. Ainsi, le rotor principal exerce une partie de la sustentation de l'hélicoptère hybride en vol de croisière avec éventuellement une faible contribution aux forces propulsives ou traction et toujours avec une traînée minimale.

La propulsion de l'hélicoptère hybride en vol de croisière est alors assurée principalement par les hélices propulsives. En effet, en modifiant collectivement et d'une même quantité le pas des pales des hélices de l'hélicoptère hybride, il est possible de contrôler la poussée générée par ces hélices propulsives et, par suite, sa vitesse d'avancement.

Il est à noter que le pas des pales d'une hélice propulsive est variable uniquement de façon collective, contrairement aux pales d'un rotor principal d'un aéronef à voilure tournante dont le pas est variable de façon collective et de façon cyclique. En conséquence et dans un souci de simplification, le terme « pas » est utilisé dans la suite de la description pour désigner le « pas collectif » des pales d'une hélice propulsive.

En outre, les fonctions anticouple et de contrôle en lacet de l'hélicoptère hybride sont réalisées par l'utilisation d'une poussée différentielle exercée en général par les deux hélices propulsives, par exemple via la mise en œuvre d'un palonnier par le pilote.

Dans ce but, les pas des pales des deux hélices propulsives s'écartent de leur pas moyen, le pas des pales d'une hélice augmentant d'un pas différentiel alors que le pas des pales de l'autre hélice diminue de ce même pas différentiel. Le pas d'une hélice est ainsi égal à la somme du pas moyen et du pas différentiel alors que le pas de l'autre hélice est égal à la différence du pas moyen et du pas différentiel. Autrement dit, le pas différentiel est égal à la demi-différence du pas d'une hélice moins le pas de l'autre hélice par exemple.

Parmi les commandes de vol d'un aéronef à voilure tournante, un manche de commande de pas cyclique permet au pilote de modifier le pas cyclique des pales du rotor principal pour diriger l'aéronef en tangage et en roulis. Un levier de commande de pas collectif permet au pilote de modifier le pas collectif des pales de ce rotor principal pour diriger l'aéronef en élévation. Un palonnier permet au pilote d'agir sur le dispositif anticouple pour diriger l'aéronef en lacet. Si ce dispositif anticouple est un rotor auxiliaire, le palonnier permet de modifier le pas collectif des pales de ce rotor auxiliaire. Dans le cas d'un hélicoptère hybride, ce palonnier permet de modifier de façon différentielle le pas des pales de chacune des deux hélices propulsives.

En outre, un hélicoptère hybride comporte généralement une commande de vol supplémentaire constituée par une manette de poussée des hélices propulsives. Cette manette de poussée permet au pilote de modifier de façon identique le pas des pales des deux hélices propulsives pour modifier la vitesse d'avancement de l'hélicoptère hybride.

Par ailleurs, les commandes de vol sont généralement reliées aux différentes pales, via des liaisons mécaniques dénommées « timoneries » ou « chaînes cinématiques mécaniques » et éventuellement via des servocommandes, notamment sur les aéronefs de grandes tailles pour lesquels les efforts de commandes sont plus importants.

Chaque chaîne cinématique mécanique applique un rapport de transmission appelé également « gain » entre l'ordre de commande de vol du pilote sur la commande de vol et la variation du pas des pales correspondantes. Ce gain peut être différent pour chaque commande de vol, mais il est généralement fixe pour chaque commande de vol d'un aéronef à voilure tournante conventionnel.

Il est cependant utile que ce gain soit modifié pour certaines commandes de vol, et la commande de vol en lacet en particulier dans le cas d'un hélicoptère hybride, en fonction des conditions de vol de l'aéronef.

Il est par exemple connu que, lorsqu'un aéronef a une vitesse d'avancement importante, une utilisation du palonnier sur de grandes amplitudes de commande peut conduire à une manœuvre générant des contraintes mécaniques importantes sur l'aéronef et/ou à une embardée de l'aéronef violente voire dangereuse autour de son axe de lacet. Ce risque, bien connu pour les avions, est également réel pour les hélicoptères hybrides dont les vitesses d'avancement en vol de croisière sont nettement augmentées par rapport aux aéronefs à voilures tournantes conventionnels.

Afin de réduire ce risque, la chaîne cinématique mécanique de la commande de vol en lacet correspondant au palonnier peut inclure un combinateur. Le combinateur est un dispositif mécanique où se superposent par exemple un ordre issu d'une commande de vol et une valeur d'un paramètre de vol ou bien deux ordres issus de deux commandes de vol distinctes.

Un combinateur vise par exemple à modifier l'amplitude d'une commande de vol selon la vitesse d'avancement de l'aéronef comme le décrit le document FR 2476013. Un tel combinateur permet ainsi un déplacement important d'un organe de manœuvre d'un avion, tel qu'une gouverne de profondeur ou de direction, à faible vitesse d'avancement et de réduire l'amplitude de ce déplacement à une vitesse d'avancement importante. Ce combinateur comporte alors un organe de réglage qui se déplace en fonction d'un signal dérivé de la pression dynamique de l'air sur l'aéronef et limite plus ou moins le déplacement d'une bielle de la chaîne cinématique mécanique de la commande de vol. Le gain de la chaîne cinématique mécanique de cette commande de vol est fixe.

Un combinateur peut également modifier le gain appliqué par une chaîne cinématique mécanique d'une commande de vol selon la vitesse d'avancement de l'aéronef comme le décrit le document FR 1132452. Un tel combinateur permet ainsi qu'un déplacement identique de la commande de vol entraîne des déplacements différents d'un organe de manœuvre en fonction de la vitesse d'avancement de l'aéronef. Le combinateur comporte un axe appartenant à une chaîne cinématique mécanique de la commande de vol d'un aéronef et dont la position est modifiée en fonction de la vitesse d'avancement de l'aéronef. Le changement de position de cet axe permet de modifier le gain de la chaîne cinématique mécanique.

En outre, on connaît le document US 2940332 qui décrit un système de commande de vol appliquant un gain variable à un ordre de commande de vol. La variation du gain est obtenue par l'intermédiaire d'un actionneur déformant un parallélogramme formé par des bielles et agencé sur la chaîne cinématique mécanique de la commande de vol. Cet actionneur peut être piloté par une consigne extérieure liée aux conditions de vol, telles que l'altitude ou bien la vitesse de l'aéronef.

Bien qu'intéressantes, ces solutions semblent peu adaptées au contexte très particulier d'un hélicoptère hybride en raison notamment de leurs limitations en terme de gain variable et d'un manque de précision sur les sorties de commande de vol.

Par ailleurs, on connaît le document FR 2946316 qui concerne un hélicoptère hybride et qui décrit un combinateur modifiant le gain appliqué par une chaîne cinématique mécanique d'une commande de vol en lacet selon l'ordre de commande en poussée collective des hélices propulsives. Ce combinateur comporte un moyen de réglage comportant des poulies et une courroie liée à la commande de poussée des hélices propulsives. Cette commande de poussée des hélices propulsives est en vol un indicateur fiable et robuste de la vitesse d'avancement par rapport à l'air de l'hélicoptère hybride.

De fait, une action d'un pilote sur la commande de poussée entraîne un déplacement de la courroie et une modification de la longueur d'un bras de levier dans la chaîne cinématique mécanique de la commande de vol en lacet générant une variation du gain de cette chaîne cinématique mécanique de la commande de vol en lacet. Par ailleurs, ce document FR 2946316 décrit également un combinateur permettant d'ajouter un terme correctif à la commande de vol en lacet en fonction de l'ordre de commande en poussée des hélices propulsives. Par contre, ces combinateurs sont complexes dans leur fonctionnement et dans leur implantation. De plus, ce combinateur prend en compte la valeur de la commande de poussée collective exercée par le pilote pour faire varier uniquement le gain sur la chaine de commande de lacet. Le gain variable n'est donc pas appliqué à la commande de poussée collective des hélices propulsives. En outre, ce moyen de réglage comportant des poulies et une courroie est limité en terme de plage et d'évolution du gain et induit également des pertes de précision sur les sorties de commande.

En outre, le palonnier, qui constitue la commande de vol en lacet de l'hélicoptère hybride, et la manette de poussée des hélices propulsives commandent conjointement une variation du pas des pales des deux hélices propulsives.

Cette variation du pas des pales des hélices propulsives est généralement commandée tout d'abord par l'intermédiaire de premières timoneries spécifiques reliées respectivement au palonnier et à la manette de poussée, puis de deux secondes timoneries, chaque seconde timonerie étant reliée à une hélice propulsive. Un moyen de regroupement permet de regrouper les premières timoneries puis d'actionner les secondes timoneries. La variation du pas des pales des hélices propulsives est alors faite de façon identique si l'ordre de commande de vol est donné par la manette de poussée. Cette variation est faite de façon différentielle si l'ordre de commande de vol est donné par le palonnier.

Chaque seconde timonerie commande généralement de façon mécanique la variation du pas des pales d'une hélice propulsive, par exemple par la translation d'un tube coaxial à l'arbre d'entraînement des pales de cette hélice propulsive en rotation.

Chaque seconde timonerie peut également commander de façon hydraulique cette variation du pas des pales d'une hélice propulsive, comme décrit dans le document FR 2992696. Chaque seconde timonerie commande un distributeur hydraulique et un fluide, telle de l'huile, circule à l'intérieur d'une chemise afin d'alimenter un vérin générant la variation de pas. En outre, cette chemise peut contenir l'arbre d'entraînement en rotation des pales de l'hélice propulsive qui peut également avoir, en plus de son mouvement de rotation, un mouvement de translation le long de son axe de rotation. De plus, cet arbre d'entraînement, au moins partiellement à l'intérieur de la chemise, est donc au moins partiellement entouré par le fluide.

Enfin, l'arrière plan technologique de l'invention comporte entre autres le document US 2620772 qui décrit un dispositif d'amplification d'efforts à taux variable pour une commande de vol.

La présente invention a alors pour objet de proposer un système de commande de vol adaptative pour un aéronef permettant de s'affranchir des limitations mentionnées ci-dessus afin de commander de façon simple et fiable un organe de vol en appliquant un gain variable de la valeur de recopie de cette commande de vol en fonction de cette valeur de recopie. On entend par « valeur de recopie » une information de la valeur courante de cette commande de vol réellement appliquée par l'organe de vol.

En particulier, la présente invention a pour objet un système de commande de vol adaptative pour le pilotage du pas des pales de chaque hélice propulsive d'un hélicoptère hybride.

Selon l'invention, un système de commande de vol adaptative pour aéronef destiné à modifier le gain de recopie appliqué à la valeur de recopie de cette commande de vol comporte :
- un moyen de commande fournissant un ordre de commande de vol par l'intermédiaire d'un premier déplacement du moyen de commande,
- un organe de pilotage destiné à commander un organe de vol de l'aéronef,
- un moyen de pilotage comportant une bielle de commande et appliquant un gain de commande afin de transformer cet ordre de commande de vol en une consigne de commande de vol et transmettant cette consigne de commande de vol à un moyen d'action par l'intermédiaire d'un deuxième déplacement de la bielle de commande,
- ce moyen d'action transformant cette consigne de commande de vol en une action de commande de vol et appliquant cette action de commande de vol à l'organe de pilotage, et
- un moyen de retour d'information fournissant une valeur de recopie de cette commande de vol au moyen de pilotage.

Ce système de commande de vol adaptative selon l'invention est remarquable en ce que le moyen de retour d'information applique un gain de recopie variable à la valeur de recopie de la commande de vol, ce gain de recopie étant variable en fonction de cette valeur de recopie de la commande de vol.

Ce système de commande de vol adaptative est notamment destiné aux aéronefs à voilures tournantes et plus particulièrement aux hélicoptères hybrides comportant un fuselage, au moins un rotor principal muni de premières pales et au moins deux hélices propulsives, positionnées de part et d'autre du fuselage. Ces hélices propulsives sont munies de secondes pales et sont par exemple positionnées sur des demi-ailes placées de part et d'autre du fuselage. Le pas des secondes pales de chaque hélice propulsive est modifiable afin de modifier la poussée générée par cette hélice propulsive.

Un système de commande de vol adaptative selon l'invention est alors positionné entre une chaîne cinématique mécanique de commande de vol pilotant un organe de vol et cet organe de vol.

Ce système de commande de vol adaptative est adapté pour le pilotage du pas des secondes pales de chaque hélice propulsive d'un tel hélicoptère hybride. Une variation de ce pas des secondes pales de ces hélices propulsives peut être commandée, pour un hélicoptère hybride, d'une part par un palonnier qui modifie de façon différentielle le pas des secondes pales de chacune des hélices propulsives et d'autre part par une manette de poussée des hélices propulsives qui modifie de façon identique le pas des pales des hélices propulsives. Un système de commande de vol adaptative permet ainsi, pour chaque hélice propulsive, de modifier le gain de recopie appliqué à la valeur de recopie du pas des secondes pales d'une hélice propulsive en fonction de cette valeur de recopie.

Un système de commande de vol adaptative est alors positionné entre les chaînes cinématiques mécaniques du palonnier et de la manette de poussée des hélices propulsives et chaque hélice propulsive de cet hélicoptère hybride.

Le moyen de commande fait partie d'une chaîne cinématique mécanique d'une commande de vol et fournit un ordre de commande de vol sous la forme d'un premier déplacement de ce moyen de commande. Ce moyen de commande est situé en fin de cette chaîne cinématique mécanique de commande de vol et est constitué par exemple par le dernier élément d'une timonerie. Ce moyen de commande peut également être constitué par l'extrémité d'un commande à roulement, aussi dénommée « gaine à billes » ou « commande à billes », et comportant une ou plusieurs rangées d'organes de roulement.

Il est à noter qu'une telle chaîne cinématique mécanique de commande de vol peut intégrer un gain entre l'ordre de commande fourni par le pilote de l'aéronef et l'ordre de commande transmis par le moyen de commande. Ce gain est fixe et constant.

Ce moyen de commande est de préférence de forme allongée, tel un tube ou une barre, s'étendant selon un axe D. Le premier déplacement du moyen de commande est alors généralement une translation sensiblement parallèle à cet axe *D*.

Pour le pilotage du pas des secondes pales des hélices propulsives d'un tel hélicoptère hybride, le moyen de commande est situé en fin de la chaîne cinématique mécanique de commande du pas des secondes pales de chaque hélice propulsive. Ce moyen de commande transmet conjointement les ordres de commande de vol du palonnier et ceux de la manette de poussée des hélices propulsives.

Le moyen de pilotage transforme le premier déplacement du moyen de commande en un deuxième déplacement de la bielle de commande, ce deuxième déplacement constituant la consigne de commande de vol. Cette transformation est réalisée en appliquant un gain de commande à l'ordre de commande de vol par l'intermédiaire par exemple d'étriers avec des bras de levier de longueurs différentes. Ce deuxième déplacement de la bielle de commande est égal au produit entre le gain de commande et le premier déplacement du moyen de commande.

Le moyen d'action transforme cette consigne de commande de vol en une action de commande de vol et applique cette action de commande de vol à un organe de pilotage.

L'organe de pilotage assure le pilotage de l'organe de vol de l'aéronef auquel s'applique l'ordre de commande de vol. Le pilotage de cet organe de vol est effectué par exemple par une translation ou une rotation de cet organe de pilotage.

Pour le pilotage du pas des secondes pales des hélices propulsives d'un hélicoptère hybride, un organe de vol modifie le pas des secondes pales d'une hélice propulsive. Dans ce cadre, l'organe de pilotage peut comporter un tube coaxial à l'arbre d'entraînement en rotation des secondes pales de l'hélice propulsive, ce tube étant translaté par exemple parallèlement à l'axe de rotation de cet arbre d'entraînement pour modifier le pas.

La translation de ce tube peut être commandée de façon mécanique, l'organe de pilotage étant un dispositif mécanique. Le moyen d'action est alors un système mécanique transformant le deuxième déplacement de la bielle de commande en une translation transmise au tube de l'organe de pilotage.

La translation de ce tube peut également être commandée de façon hydraulique, l'organe de pilotage étant un dispositif hydraulique commandant cette variation du pas des secondes pales d'une hélice propulsive, comme décrit dans le document FR 2992696. Le moyen d'action est alors un système hydraulique alimentant ce dispositif hydraulique et commandé par la bielle de commande. Ce système hydraulique est par exemple un distributeur hydraulique.

Enfin, le moyen de retour d'information fournit au moyen de pilotage une valeur de recopie de cette commande de vol correspondant à la valeur courante de la commande de vol réellement appliquée par l'organe de vol. Ce moyen de retour d'information peut par exemple utiliser le tube de l'organe de pilotage afin de définir cette valeur de recopie de la commande de vol, cette valeur de recopie étant ensuite transmise mécaniquement par l'intermédiaire d'un système de bielles au moyen de pilotage. Ce moyen de retour d'information peut également être désigné par l'expression « moyen de recopie ».

Le moyen de pilotage prend ainsi en compte cette valeur de recopie de la commande de vol pour réguler le fonctionnement du moyen d'action pilotant l'organe de vol afin que cet organe de vol applique l'ordre de commande de vol.

Le moyen de retour d'information selon l'invention applique un gain de recopie variable à la valeur de recopie de la commande de vol afin de fournir au moyen de pilotage une information différente en fonction de cette valeur de recopie de la commande de vol.

Dans ce but, le moyen de retour d'information comporte un moyen de transfert et une bielle de transfert. Le moyen de transfert est lié à l'organe de pilotage et possède au moins un degré de liberté. L'organe de pilotage transmet ainsi au moins un de ses mouvements au moyen de transfert générant un troisième déplacement de ce moyen de transfert.

Le moyen de transfert peut par exemple être solidaire de l'organe de pilotage, le moyen de transfert possédant alors les mêmes capacités de mouvement que l'organe de pilotage. En effet, on considère que deux éléments sont solidaires lorsqu'ils sont liés entre eux de façon rigide et donc soumis aux mêmes déplacements.

De préférence, le moyen de transfert possède un seul degré de liberté. Le moyen de transfert possède par exemple uniquement une capacité de mouvement en translation, le troisième déplacement en translation étant transmis par l'organe de pilotage. Le moyen de transfert peut également posséder uniquement une capacité de mouvement en rotation, le troisième déplacement en rotation étant transmis par cet organe de pilotage.

Le moyen de transfert peut alors être solidaire de l'organe de pilotage lorsque cet organe de pilotage possède une seule capacité de mouvement.

Lorsque cet organe de pilotage possède au moins deux capacités de mouvement, le moyen de transfert est alors lié à l'organe de pilotage par une première liaison mécanique. Cette première liaison mécanique transmet le troisième déplacement au moyen de transfert tout en autorisant un mouvement relatif entre le moyen de transfert et l'organe de pilotage.

Par exemple, lorsque cet organe de pilotage possède deux capacités de mouvement, à savoir un mouvement de translation et un mouvement de rotation, la première liaison mécanique est une liaison pivot lorsque le moyen de transfert possède uniquement une capacité de mouvement en translation.

Le moyen de transfert est lié à la bielle de transfert par une deuxième liaison mécanique. Le troisième déplacement du moyen de transfert peut alors entraîner un quatrième déplacement de la bielle de transfert par l'intermédiaire de cette deuxième liaison mécanique. Ce quatrième déplacement de la bielle de transfert peut être une translation ou bien une rotation. Le moyen de transfert applique alors le gain de recopie à la valeur de recopie de la commande de vol en transformant le troisième déplacement du moyen de transfert en quatrième déplacement de la bielle de transfert.

Cette deuxième liaison mécanique peut être formée par une rainure présente sur le moyen de transfert et par un pion que comporte la bielle de transfert. Le pion est situé dans la rainure, le troisième déplacement de ce moyen de transfert pouvant alors entraîner un mouvement du pion dans la rainure et, par suite, le quatrième déplacement de la bielle de transfert.

Cette rainure peut être formée par plusieurs droites successives de pentes différentes sur l'ensemble du moyen de transfert. Dans ce cas, le moyen de retour d'information applique avantageusement un gain de recopie variable à la valeur de recopie de la commande de vol sur l'ensemble du moyen de transfert. En effet, ce gain de recopie est constant tant que le pion se trouve sur une même droite de la rainure, mais ce gain de recopie varie lorsque le pion change de droite dans la rainure. Ce gain de recopie est proportionnel à la pente de la rainure dans laquelle se situe le pion. Avantageusement, ce gain de recopie varie en fonction de la valeur de recopie de la commande de vol.

Cette rainure peut également être formée par une courbe sur l'ensemble du moyen de transfert. Dans ce cas, le gain de recopie varie de façon continue selon la position du pion dans la rainure.

Ainsi, le déplacement du pion dans la rainure entraîne une variation du gain de recopie lorsque le pion change de pente dans la rainure ou bien lorsque le pion se déplace dans une rainure en courbe.

De la sorte, la valeur de recopie de la commande de vol fournie par le moyen de retour d'information au moyen de pilotage peut être pondérée en fonction de ce gain de recopie et donc de la valeur courante commande de vol réellement appliquée par l'organe de vol. La régulation du fonctionnement du moyen d'action pilotant l'organe de vol peut ainsi être adaptée en fonction de ce gain de recopie et donc de la valeur courante commande de vol réellement appliquée par l'organe de vol.

Il est à noter que si cette rainure était formée par une seule droite, donc selon une seule pente, sur l'ensemble du moyen de transfert, le moyen de retour d'information appliquerait un gain de recopie constant à la valeur de recopie de la commande de vol.

Le moyen de retour d'information fournit ensuite la valeur de recopie de la commande de vol à laquelle est appliqué le gain de recopie au moyen de pilotage afin d'assurer la régulation du moyen d'action pilotant l'organe de vol selon l'ordre de commande de vol et cette valeur de recopie de la commande de vol à laquelle est appliqué le gain de recopie.

Le moyen de pilotage comporte un premier étrier lié à la bielle de transfert et un second étrier lié au premier étrier, au moyen de commande et à la bielle de commande. La bielle de transfert étant liée au premier étrier, le quatrième déplacement de la bielle de transfert entraîne alors un cinquième déplacement du premier étrier.

La bielle de transfert peut être liée au premier étrier par une troisième liaison mécanique qui transforme alors le quatrième déplacement de la bielle de transfert en un cinquième déplacement du premier étrier.

De préférence, la bielle de transfert est solidaire du premier étrier. Par exemple, le quatrième déplacement de la bielle de transfert et le cinquième déplacement du premier étrier sont une rotation autour d'un même axe de rotation.

Le second étrier est lié au premier étrier par une première liaison pivot et au moyen de commande par une seconde liaison pivot. La bielle de commande peut être solidaire de ce second étrier. De préférence, cette bielle de commande est liée au second étrier par une troisième liaison pivot.

Le premier déplacement du moyen de commande représentant l'ordre de commande de vol entraîne alors une rotation du second étrier autour de la première liaison pivot et, par suite, le deuxième déplacement de la bielle de commande.

Un premier bras de levier est défini par une première distance entre la première liaison pivot et la seconde liaison pivot, cette première distance étant définie perpendiculairement à l'axe *D.* Un second bras de levier est défini par une seconde distance entre la première liaison pivot et la troisième liaison pivot, cette seconde distance étant également définie perpendiculairement à l'axe *D*. Dans le cas où la bielle de commande est solidaire du second étrier, le second bras de levier est défini par une seconde distance entre la première liaison pivot et le point de fixation de la bielle de commande avec le second étrier.

Le gain de commande appliqué par le moyen de pilotage est alors égal au rapport entre la seconde distance et la première distance.

En outre, la première liaison pivot est soumise au cinquième déplacement du premier étrier et entraîne alors un sixième déplacement du second étrier. De fait, le sixième déplacement du second étrier entraîne un déplacement complémentaire de la bielle de commande. Ce déplacement complémentaire de la bielle de commande se combine au deuxième déplacement de la bielle de commande afin de modifier la consigne de commande de vol et de réguler ainsi le fonctionnement du moyen d'action pilotant l'organe de vol. Généralement, ce déplacement complémentaire de la bielle de commande qui est fonction de la valeur de recopie de la commande de vol à laquelle est appliqué le gain de recopie s'oppose au deuxième déplacement de la bielle de commande lorsque l'organe de vol se rapproche de l'application de l'ordre de commande de vol.

De plus, le cinquième déplacement du premier étrier et le sixième déplacement du second étrier génèrent une modification des première et seconde distances, l'axe *D* étant par ailleurs sensiblement inchangée. En conséquence, le gain de commande appliqué par le moyen de pilotage à l'ordre de commande de vol est modifié. Cette modification de ce gain de commande est ainsi réalisée en fonction de la valeur du cinquième déplacement du premier étrier qui est fonction de la valeur de recopie de la commande de vol à laquelle est appliqué le gain de recopie.

Le gain de commande est appliqué à l'ordre de commande de vol fourni par le moyen de commande et est modifié par le moyen de retour d'information. Ce gain de commande est donc avantageusement variable en fonction la valeur de recopie de la commande de vol qui correspond à la valeur courante de la commande de vol réellement appliquée par l'organe de vol et non en fonction du déplacement du moyen de commande.

Par ailleurs, le gain de recopie appliqué à cette valeur de recopie de la commande de vol est également variable en fonction de cette valeur de recopie du moyen de retour d'information. Cette valeur de recopie de la commande de vol peut donc être diminué ou bien amplifié afin d'être transmise au moyen de pilotage.

Ainsi, le déplacement de la bielle de commande pilotant le moyen d'action est définie en appliquant d'une part le gain de commande à l'ordre de commande de vol et d'autre part le gain de recopie à la valeur de recopie de la commande de vol, le gain de commande et le gain de recopie étant variable en fonction de cette valeur courante de la commande de vol réellement appliquée par l'organe de vol.

Avantageusement, l'application du gain de commande et du gain de recopie ainsi que le pilotage des variations de ces gains sont situés à l'extrémité de la chaîne cinématique mécanique de la commande de vol, directement au niveau du moyen d'action et de l'organe de pilotage de l'organe de vol, contrairement aux dispositifs existants, notamment décrits dans les documents FR 1132452 et FR 2946316. De fait, le déplacement de la chaîne cinématique mécanique de la commande de vol, située en amont de l'application de ces gains et du pilotage de leurs variations est relativement important, le gain de commande étant généralement inférieur à un. Par contre, pour les dispositifs existants, l'application des gains et leurs pilotages de sont situés en amont de l'organe de pilotage, et plus précisément sur la chaîne cinématique mécanique de la commande de vol. En conséquence, le déplacement de la chaîne cinématique mécanique est relativement important en amont et nettement réduit en aval de cette application de ces gains et/ou du pilotage de leurs variations.

Ainsi, le système de commande de vol adaptative selon l'invention n'est que peu, voire pas perturbé par les dispersions ou les imprécisions liées à la chaîne cinématique mécanique de la commande de vol. En effet, ces dispersions ou imprécisions qui sont constituées par de faibles déplacements ou déformations, n'ont que des effets négligeables sur les déplacements de la chaîne cinématique mécanique qui sont relativement importants. Ces dispersions ou imprécisions sont par exemple dues à la grande longueur de la chaîne cinématique mécanique et aux dilatations qu'elle peut subir.

De même, les déplacements de la chaîne cinématique mécanique de commande de vol étant relativement importants, cette chaîne cinématique mécanique reste peu chargée en effort. De fait, ses dimensions et sa masse peuvent alors être optimisées.

Enfin, l'application de ces gains et le pilotage de leurs variations peuvent générer des frictions sur une chaîne cinématique mécanique de la commande de vol augmentant en conséquence les efforts de commande de cette chaîne cinématique mécanique de la commande de vol. Avantageusement, l'application des gains de commande et de recopie ainsi que le pilotage de leurs variations sont situés au niveau de l'organe de pilotage de l'organe de vol et n'ajoute alors aucun effort de friction, ni effort parasite à la chaîne cinématique mécanique de la commande de vol.

Les efforts de friction liés à l'application des gains de commande et de recopie ainsi que le pilotage de leurs variations sur système de commande de vol adaptative selon l'invention apparaissent au niveau du moyen de recopie dont le déplacement est généré directement par l'organe de vol. Ces efforts de friction sont alors négligeables par rapport aux capacités de cet organe de pilotage qui est par exemple un dispositif hydraulique.

Par ailleurs, la cinématique du moyen de pilotage du système de commande de vol adaptative selon l'invention garantit avantageusement l'absence d'un couplage significatif du moyen de commande avec le gain de commande et avec le gain de recopie. Ainsi, un premier déplacement du moyen de commande n'entraîne aucune variation du gain de commande et aucune variation du gain de recopie. De fait, le gain de commande et le gain de recopie sont indépendants et insensibles face à toute action du moyen de commande, c'est-à-dire toute action sur le palonnier ou sur la manette de poussée des hélices propulsives.

De plus, le système de commande de vol adaptative selon l'invention est un système entièrement mécanique et éventuellement hydraulique pour le moyen d'action et l'organe de pilotage ce qui est un gage de fiabilité. Toutefois, la fiabilité des première, deuxième et troisième liaisons mécaniques doit être garantie et en particulier l'absence de risque de grippage ou de blocage afin notamment d'obtenir les certifications nécessaires à l'implantation de ce système de commande de vol adaptative à bord d'un aéronef.

Dans ce but, la première liaison mécanique et la deuxième liaison mécanique peuvent être alors situées à l'intérieur d'une zone lubrifiée de façon permanente. Avantageusement, le moyen de retour d'information, et en particulier le moyen de transfert et la bielle de transfert, sont alors au moins partiellement situés dans une telle zone et lubrifiés de façon permanente. La première liaison mécanique et la deuxième liaison mécanique sont ainsi lubrifiées de façon permanente, sans la présence d'un système de lubrification dédié. De plus, la bielle de transfert est implantée de façon solidaire avec le premier étrier afin de supprimer la troisième liaison mécanique et les risques de grippage ou de blocage associés.

La fiabilité du moyen de retour d'information est ainsi garantie pour obtenir les certifications nécessaires à l'implantation de ce système de commande de vol adaptative à bord d'un aéronef.

Par exemple, le moyen de retour d'information est situé dans une boîte de transmission de puissance d'une hélice propulsive et utilise le dispositif de lubrification de cette boîte de transmission.

En outre, le système de commande de vol adaptative selon l'invention, lorsqu'il est utilisé pour le pilotage du pas des secondes pales d'une hélice propulsive d'un hélicoptère hybride, permet avantageusement de modifier le gain de commande appliqué à un premier ordre du palonnier et à un second ordre de la manette de poussée des hélices propulsives ainsi que le gain de recopie appliqué à la valeur de recopie du pas des secondes pales de cette hélice propulsive en fonction de cette valeur de recopie. Cette valeur de recopie qui caractérise la poussée générée par l'hélice propulsive est un indicateur fiable et robuste de la vitesse d'avancement de l'hélicoptère hybride. Le système de commande de vol adaptative permet ainsi de faire varier le gain de commande et le gain de recopie selon la vitesse d'avancement de l'hélicoptère hybride et notamment de modifier ces gains lorsque cette vitesse d'avancement est importante.

Le système de commande de vol adaptative selon l'invention permet alors de diminuer l'autorité du pilote sur les commandes de vol, et en particulier sur le palonnier et la manette de poussée, pour des vitesses d'avancement importantes, minimisant ainsi leurs actions sur le comportement de l'aéronef. Ainsi, un même ordre de commande de vol transmis par le moyen de commande génère par exemple une variation du pas des pales d'une hélice propulsive plus importante à faible vitesse d'avancement qu'à grande vitesse. Ainsi, le système de commande de vol adaptative selon l'invention permet une grande autorité de commande en vol stationnaire pour garantir la manœuvrabilité de l'aéronef, et de limiter l'autorité de commande en vol de croisière pour garantir la stabilité du vol quel que soit les actions pilote et de prévenir ainsi tout surcouple sur les chaînes de transmission mécanique des hélices propulsives.

Dans ce but, le gain de recopie est par exemple augmenté de façon importante lorsque la vitesse d'avancement est importante afin de limiter l'effet d'un premier déplacement du moyen de commande sur le comportement de l'aéronef et, par suite, l'autorité du pilote sur ces commandes de vol.

Avantageusement, une action du pilote sur le palonnier ou la manette de poussée des hélices propulsives lorsque l'hélicoptère hybride évolue à des hautes vitesses, n'entraîne alors pas une variation rapide du pas des secondes pales de chaque hélice propulsive. Les variations du gain de commande et du gain de recopie sont alors les mêmes pour les mouvements en lacet de l'aéronef et pour les modifications de la poussée générées par les hélices propulsives.

Ainsi, une action sur le palonnier n'entraîne alors pas d'embardées brusques voire incontrôlables de l'aéronef autour de son axe de lacet ni de dégradations des éléments aérodynamiques qu'il comporte.

De même, une action du pilote sur la manette de poussée des hélices propulsives n'entraîne alors pas de dégradation de ces hélices propulsive ou bien de la chaîne de transmission mécanique de ces hélices propulsives.

En effet, sans ce système de commande de vol adaptative, une action du pilote sur la manette de poussée des hélices propulsives à hautes vitesses provoquerait par exemple une diminution de la poussée générée par les hélices propulsives sans réduction rapide de la vitesse d'avancement de l'aéronef. Par suite, le flux d'air généré par l'avancement rapide de l'aéronef entraînerait une accélération de la rotation des secondes pales des hélices propulsives qui entraîneraient ensuite une accélération de la chaîne de transmission mécanique de ces hélices propulsives. Des surcouples peuvent alors apparaître au niveau des chaînes de transmission mécanique de ces hélices propulsives et générer une accélération de l'usure de cette chaîne de transmission mécanique, voire l'apparition brutale de défaillances et/ou de rupture mécanique.

En conséquence, le vol de l'hélicoptère hybride peut se dérouler de façon plus sûre, sans ces risques, grâce à l'utilisation du système de commande de vol adaptative selon l'invention.

Il est à noter que les gains de commande minimal et maximal ainsi que les gains de recopie minimal et maximal sont déterminés à l'aide d'essais usuels en fonction des caractéristiques de l'aéronef et de simulations permettant de tester différentes configurations, l'homme du métier étant à même d'optimiser les valeurs et les évolutions de ces gains maximal et minimal.

Par exemple, la variation du gain de recopie est de l'ordre de 500% entre les gains minimal et maximal alors que le gain de commande est sensiblement constant. La variation de ce gain de recopie est le facteur important pour permettre une adaptation efficace de l'ordre de commande de vol d'un organe de vol à la valeur courante de la commande de vol réellement appliquée par l'organe de vol.

De préférence, le gain de commande est sensiblement constant ou varie très faiblement alors que la variation du gain de recopie est importante.

En outre, le débattement de la bielle de commande pilotant le moyen d'action peut être limité par la présence de butées. Ces butées permettent de limiter l'amplitude de la commande appliquée au moyen d'action et, par suite, d'éviter une variation trop rapide de la commande de vol appliquée à l'organe de vol.

La présente invention a également pour objet un système de transmission de puissance d'une hélice propulsive comportant un système de commande de vol adaptative tel que précédemment décrit et une boîte de transmission de puissance d'une hélice propulsive.

Le moyen de retour d'information est de préférence situé à l'intérieur de la boîte de transmission de puissance d'une hélice propulsive afin que le moyen de retour d'information soit lubrifié de façon permanente.

La présente invention a aussi pour objet un aéronef à voilure tournante comportant au moins un organe de vol, au moins une commande de vol et au moins une chaîne cinématique mécanique de commande de vol pilotant un organe de vol ainsi qu'au moins un système de transmission de puissance d'une hélice propulsive comme précédemment décrit et positionné entre une chaîne cinématique mécanique de commande de vol et l'organe de vol correspondant.

Cet aéronef est notamment un hélicoptère hybride comportant un fuselage, au moins un rotor principal muni de premières pales et au moins deux hélices propulsives, positionnées de part et d'autre du fuselage et munies de secondes pales. Un système de transmission de puissance d'une hélice propulsive est positionné entre chaque chaîne cinématique mécanique de commande du pas des secondes pales d'une hélice propulsive et cette hélice propulsive.

Pour cet hélicoptère hybride, une première commande de vol est un palonnier de commande de vol en lacet de l'aéronef commandant de façon différentielle le pas des secondes pales de chaque hélice propulsive et une seconde commande de vol est une manette de poussée des hélices propulsives commandant de façon identique le pas des secondes pales de chaque hélice propulsive. Les première et seconde commandes de vol agissent de façon conjointe sur les moyens de commande du système de commande de vol adaptative de chaque système de transmission de puissance d'une hélice propulsive.

L'invention et ses avantages apparaîtront avec plus de détails dans le cadre de la description qui suit avec des exemples de réalisation donnés à titre illustratif en référence aux figures annexées qui représentent :
- la figure 1, un hélicoptère hybride,
- la figure 2, un schéma de l'architecture de commande de la variation du pas des secondes pales des hélices propulsives,
- les figures 3 et 4, deux vues en perspective d'un système de commande de vol adaptative selon l'invention,
- la figure 5, une vue de dessus de ce système de commande de vol adaptative, et
- la figure 6, un schéma du principe de fonctionnement du système de commande de vol adaptative.

Les éléments présents dans plusieurs figures distinctes sont affectés d'une seule et même référence.

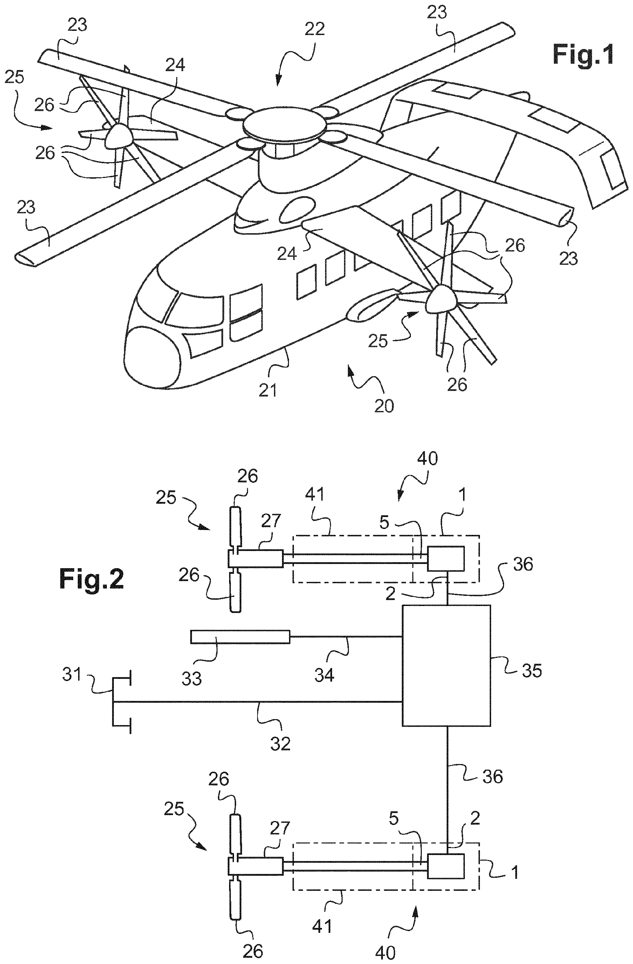

La figure 1 représente un aéronef 20 de type hélicoptère hybride comportant un fuselage 21, un rotor principal 22 comportant des premières pales 23, deux demi-ailes 24 positionnées de part et d'autre du fuselage 21 et deux hélices propulsives 25 munies de secondes pales 26. Une hélice propulsive 25 est positionnée sur chaque demi-aile 24.

Le rotor principal 22 assure la totalité de la portance de l'hélicoptère hybride 20 pendant les phases de décollage, d'atterrissage et de vol vertical ainsi que les mouvements autour de ses axes de tangage et de roulis. Pendant un vol de croisière, cette portance est répartie entre le rotor principal 22 et les demi-ailes 24.

La propulsion de l'hélicoptère hybride 20 est assurée principalement par les hélices propulsives 25, notamment en vol de croisière, éventuellement avec une contribution du rotor principal 22. Chaque hélice propulsive 25 génère une poussée variable selon le pas de leurs secondes pales 26 permettant de contrôler la vitesse d'avancement de l'hélicoptère hybride 20.

En outre, les hélices propulsives 25 assurent également les fonctions anticouple et de contrôle en lacet de l'hélicoptère hybride 20, par l'intermédiaire d'une poussée différentielle de ces deux hélices propulsives 25.

L'hélicoptère hybride 20 comporte une première commande de vol qui est un palonnier 31 permettant au pilote de contrôler les mouvements de l'hélicoptère hybride 20 autour de son axe de lacet en modifiant de façon différentielle le pas des secondes pales 26 des deux hélices propulsives 25.

L'hélicoptère hybride 20 comporte également une seconde commande de vol qui est une manette de poussée 33 des hélices propulsives 25 permettant au pilote de modifier de façon identique le pas des secondes pales 26 des deux hélices propulsives 25 pour modifier la vitesse d'avancement de l'hélicoptère hybride 20.

Comme représenté sur la figure 2, le palonnier 31 et la manette de poussée 33 sont reliés respectivement à un chaîne cinématique mécanique primaire 32,34 de commande. Les deux chaînes cinématiques mécaniques primaires 32,34 sont reliées à deux chaînes cinématiques mécaniques secondaires 36 par l'intermédiaire d'un moyen de regroupement 35 afin de commander conjointement la variation du pas des secondes pales 26 de chaque hélice propulsive 25 par l'intermédiaire d'un organe de vol 27.

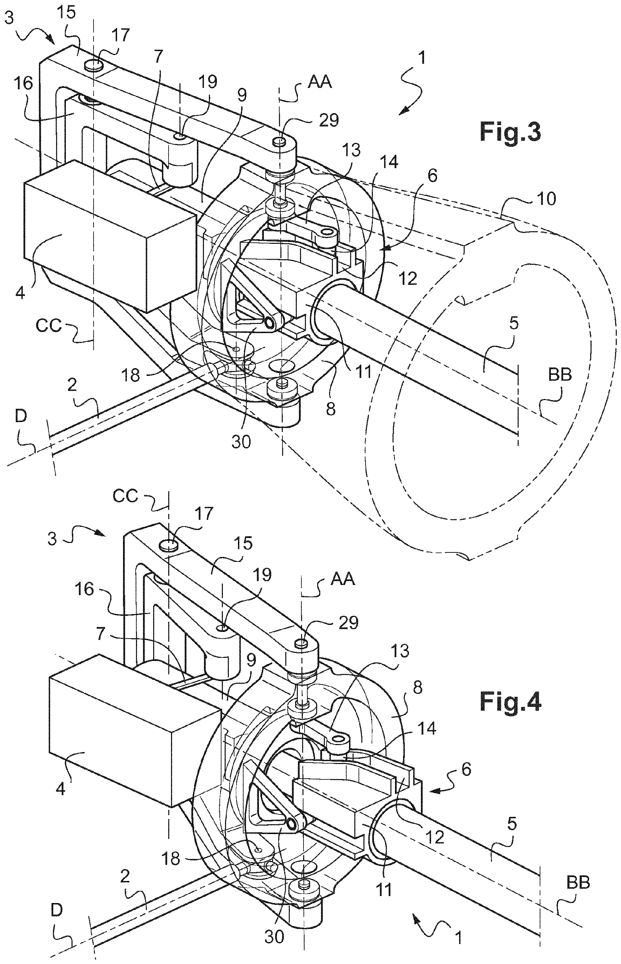

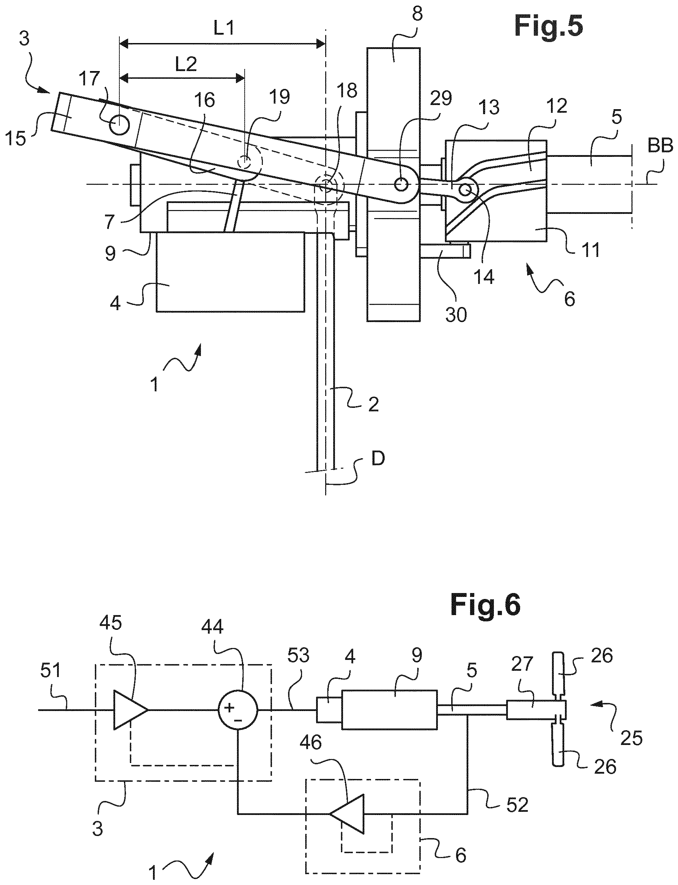

L'hélicoptère hybride 20 comporte deux systèmes de commande de vol adaptative 1 représentés en détail sur les figures 3 à 5 et dont un schéma du principe de fonctionnement est représenté sur la figure 6. Un système de commande de vol adaptative 1 est positionné à une extrémité de chacune de ces deux chaînes cinématiques mécaniques secondaires 36, plus précisément entre une chaîne cinématique mécanique secondaire 36 et un organe de vol 27 d'une hélice propulsive 25.

Les figures 3 et 4 représentent deux vues en perspective d'un système de commande de vol adaptative 1 pour deux positions extrêmes d'utilisation. La figure 5 représente une vue de dessus de ce système de commande de vol adaptative 1 pour la position extrême représentée sur la figure 4.

Le système de commande de vol adaptative 1 comporte un moyen de commande 2, un moyen de pilotage 3, un moyen d'action 4, un organe de pilotage 5, un moyen de retour d'information 6 et une couronne 8.

Sur la figure 3, le carter 10 d'une boîte de transmission de puissance d'une hélice propulsive 41 est représenté. Ce carter 10 est fixé à la couronne 8 du système de commande de vol adaptative 1. Le système de commande de vol adaptative 1 forme avec cette boîte de transmission de puissance d'une hélice propulsive 41 un système de transmission de puissance d'une hélice propulsive 40. Sur la figure 3, la couronne 8 et le carter 10 sont représentés de façon transparente afin de faciliter la compréhension du fonctionnement du système de commande de vol adaptative 1. De même, sur la figure 4, la couronne 8 est représentée de façon transparente.

Le moyen de retour d'information 6 comporte un moyen de transfert 11 et une bielle de transfert 13. Le moyen de pilotage 3 comporte une bielle de commande 7, un premier étrier 15 lié à la bielle de transfert 13 et un second étrier 16 lié au premier étrier 15, au moyen de commande 2 et à la bielle de commande 7.

Le moyen de commande 2 est un tube s'étendant selon un axe *D* et constitué par l'extrémité d'une chaîne cinématique mécanique secondaire 36. Cette chaîne cinématique mécanique secondaire 36 transmet ainsi un ordre de variation du pas des secondes pales 26 par l'intermédiaire d'un premier déplacement de ce moyen de commande 2. Ce premier déplacement est une translation sensiblement parallèle à l'axe *D*.

Cet ordre de variation du pas des secondes pales 26 est fourni par un pilote de l'hélicoptère hybride 20 par l'intermédiaire du palonnier 31 ou bien de la manette de poussée 33. Cet ordre de variation du pas peut également être fourni par un pilote automatique équipant cet hélicoptère hybride 20 et agissant directement sur les deux chaînes cinématiques mécaniques primaires 32,34.

Par ailleurs, une première liaison pivot 17 relie le premier étrier 15 et le second étrier 16. De même, le second étrier 16 est lié au moyen de commande 2 par une seconde liaison pivot 18 et à la bielle de commande 7 par une troisième liaison pivot 19.

Le premier déplacement du moyen de commande 2 entraîne une rotation du second étrier 16 autour de l'axe *CC* de la première liaison pivot 17 et provoque un deuxième déplacement de la bielle de commande 7 qui constitue alors la consigne de variation du pas des secondes pales 26. Cette consigne correspond à l'ordre de variation du pas des secondes pales 26 auquel a été appliqué un gain de commande par le moyen de pilotage 3.

Ce gain de commande est défini par la géométrie du moyen de pilotage 3. Une première distance *L1* entre la première liaison pivot 17 et la seconde liaison pivot 18 définit un premier bras de levier perpendiculairement à l'axe *D*, comme représenté sur la figure 5. De même, une seconde distance *L2* entre la première liaison pivot 17 et la troisième liaison pivot 19 définit un second bras de levier perpendiculairement à l'axe *D*. Le gain de commande est alors égal à la seconde distance *L2* divisée par la première distance *L1*.

Le moyen d'action 4 reçoit cette consigne de variation du pas des secondes pales 26 par l'intermédiaire du deuxième déplacement de la bielle de commande 7. Le moyen d'action 4 transforme cette consigne en une action de variation du pas des secondes pales 26 et applique cette action à l'organe de pilotage 5.

L'organe de pilotage 5 est un tube coaxial à l'arbre d'entraînement en rotation des secondes pales 26 de l'hélice propulsive 25 et assure le pilotage de l'organe de vol 27 par une translation parallèlement à l'axe *BB.* Cet organe de vol 27 modifie alors le pas des secondes pales 26 d'une hélice propulsive 25 en fonction de cette translation de l'organe de pilotage 5. Cet organe de pilotage 5 peut également être entraîné en rotation autour de l'axe *BB* par cet arbre d'entraînement.

Le moyen d'action 4 transforme donc le deuxième déplacement de la bielle de commande 7, c'est-à-dire la consigne de variation du pas des secondes pales 26, en cette translation de l'organe de pilotage 5.

La translation de cet organe de pilotage 5 peut être commandée de façon mécanique par le moyen d'action 4. Le moyen d'action 4 est alors un système mécanique transformant le deuxième déplacement de la bielle de commande 7 en une translation transmise à l'organe de pilotage 5, éventuellement par l'intermédiaire d'un moyen d'amplification 9. Ce moyen d'amplification 9 permet de fournir, lorsque cela est nécessaire, la puissance nécessaire à la translation de l'organe de pilotage 5 afin de modifier le pas des secondes pales 26.

La translation de cet organe de pilotage 5 peut également être commandée de façon hydraulique par le moyen d'action 4. Le moyen d'action 4 est alors un système hydraulique, par exemple un distributeur hydraulique, commandé par la bielle de commande 7 et alimentant le moyen d'amplification 9 qui est alors un vérin. Ce vérin assure alors la translation de l'organe de pilotage 5.

Le moyen de transfert 11 que comporte le moyen de retour d'information 6 est lié à l'organe de pilotage 5 par une première liaison mécanique, la translation de l'organe de pilotage 5 générant un troisième déplacement du moyen de transfert 11. Par contre, un moyen de blocage 30 empêche que la rotation de l'organe de pilotage 5 soit transmise au moyen de transfert 11. Le moyen de blocage 30 est solidaire de la couronne 8 qui est fixe. De fait, le moyen de transfert 11 possède uniquement un degré de liberté en translation par rapport à la couronne 8, le troisième déplacement de ce moyen de transfert 11 étant une translation parallèle à l'axe *BB.* L'organe de pilotage 5 possède quand à lui deux degrés de liberté par rapport à la couronne 8, une translation parallèle à l'axe *BB* et une rotation autour de l'axe *BB.*

Le moyen de transfert 11 est lié à la bielle de transfert 13 par une deuxième liaison mécanique. Le moyen de transfert 11 comporte une rainure 12 et la bielle de transfert 13 comporte un pion 14 situé dans la rainure 12. Cette deuxième liaison mécanique est donc formée par la rainure 12 et le pion 14 qui peut se déplacer dans cette rainure 12. De la sorte, le troisième déplacement du moyen de transfert 11 entraîne un mouvement du pion 14 dans la rainure 12 et, par suite, un quatrième déplacement de la bielle de transfert 13.

Ce quatrième déplacement de la bielle de transfert 13 correspond à une information fournie par le moyen de retour d'information 6 de la position de l'organe de pilotage 5 qui caractérise la valeur courante du pas des secondes pales 26 de l'hélice propulsive 25 réellement appliquée par l'organe de vol 27, désignée « valeur de recopie ».

Cette rainure 12 est formée par deux droites ayant deux pentes différentes. Le moyen de retour d'information 6 applique grâce à ces deux droites de pentes différentes un gain de recopie variable à la valeur de recopie. Ce gain de recopie est alors proportionnel à la pente de la rainure 12 et avantageusement est fonction de la position du pion 14 dans la rainure 12, donc de la valeur de recopie.

Par exemple, on considère que le gain de recopie est égal à un lorsque le pion 14 est situé au niveau d'une première pente de la rainure 12, tel que représenté sur la figure 3. Cette première position du moyen de transfert 11 correspond à une faible valeur du pas collectif des secondes pales 26, qui caractérise une faible poussée, voire une poussée nulle, de l'hélice propulsive 25.

Ce gain de recopie est égal à six lorsque le pion 14 est situé au niveau d'une seconde pente de la rainure 12, tel que représenté sur les figure 4 et 5. Cette seconde position du moyen de transfert 11 correspond à une valeur importante du pas collectif des secondes pales 26, qui caractérise une poussée importante, voire une poussée maximale, de l'hélice propulsive 25.

Par ailleurs, l'organe de pilotage 5 et le moyen de retour d'information 6 sont situés à l'intérieur du carter 10 d'une boîte de transmission de puissance d'une hélice propulsive 41 comme représenté la figure 3. Le moyen de retour d'information 6 est ainsi situé à l'intérieur d'une zone remplie d'huile. De fait, le moyen de retour d'information 6 et en particulier la deuxième liaison mécanique formée par la rainure 12 et le pion 14 sont de fait lubrifiés de façon permanente.

La bielle de transfert 13 est solidaire du premier étrier 15, le quatrième déplacement de la bielle de transfert 13 transmettant ainsi un cinquième déplacement au premier étrier 15. De plus, la bielle de transfert 13 est liée à la couronne 8 par une quatrième liaison pivot 29. De fait, le quatrième déplacement de la bielle de transfert 13 est une rotation autour de l'axe de rotation *AA* de cette quatrième liaison pivot 29 et, par suite, le cinquième déplacement du premier étrier est également une rotation autour de l'axe de rotation *AA.*

En outre, ce cinquième déplacement du premier étrier 15 entraîne une rotation de la première liaison pivot 17 autour de l'axe de rotation *AA.* Par suite, cette rotation de la première liaison pivot 17 entraîne un sixième déplacement du second étrier 16.

Ce sixième déplacement du second étrier 16 entraîne un déplacement complémentaire de la bielle de commande 7 qui se combine au deuxième déplacement de cette bielle de commande 7 modifiant la consigne de commande de vol et régulant ainsi la variation du pas des secondes pales 26 de chaque hélice propulsive 25 par l'intermédiaire du moyen d'action 4 et de l'organe de vol 27.

Ce cinquième déplacement du premier étrier 15 et ce sixième déplacement du second étrier 16 génèrent également une diminution des première et seconde distances *L1*,*L2*, l'axe *D* étant inchangé. Le gain de commande appliqué par le moyen de pilotage 3 à l'ordre de commande de vol est ainsi modifié. La variation de ce gain de commande est réalisée en fonction de la valeur de recopie.

Toutefois, la variation de ce gain de commande est faible, notamment vis-à-vis de la variation du gain de recopie. Cette variation de ce gain de commande est de l'ordre de 5% et donc négligeable, le débattement angulaire des premier et second étriers 15,16 étant de l'ordre de +/-30°.

Le système de commande de vol adaptative 1 permet avantageusement de modifier le gain de recopie appliqué à la valeur de recopie et le gain de commande appliqué d'une part à un premier ordre du palonnier 31 et d'autre part à un second ordre de la manette de poussée 33 des hélices propulsives 25 en fonction de la valeur de recopie. Cette valeur de recopie qui caractérise la valeur courante du pas des secondes pales 26 des hélices propulsives 25 réellement appliquée par l'organe de vol 27 permet de définir la poussée générée par chaque hélice propulsive 25 et constitue donc un indicateur fiable et robuste de la vitesse d'avancement de l'hélicoptère hybride 20.

Le schéma de principe représenté sur la figure 6 permet de résumer le fonctionnement du système de commande de vol adaptative 1.

Selon ce schéma de principe, le moyen d'action 4 pilote le moyen d'amplification 9 qui entraîne l'organe de pilotage 5 afin de modifier le pas des secondes pales 26 d'une hélice propulsive 25 par l'intermédiaire de l'organe de vol 27.

Le moyen de retour d'information 6 fournit la valeur de recopie 52 au moyen de pilotage 3 qui la combine avec l'ordre de commande 51 pour former la consigne 53 de variation du pas des secondes pales 26.

Le moyen de retour d'information 6 comporte un premier moyen d'application 46 du gain de recopie sur la valeur de recopie 52, ce gain de recopie étant variable en fonction de cette valeur de recopie 52 elle-même.

Le moyen de pilotage 3 comporte un second moyen d'application 45 du gain de commande sur l'ordre de commande 51, ce gain de commande étant variable en fonction de la valeur de recopie 52. Le moyen de pilotage 3 comporte également un soustracteur 44 permettant de déduire de l'ordre de commande 51 auquel a été appliqué le gain de commande la valeur de recopie 52 à laquelle a été appliqué le gain de recopie. La sortie de ce soustracteur 44 constitue la consigne 53 de variation du pas des secondes pales 26 qui est fournie au moyen d'action 4.

Le système de commande de vol adaptative 1 permet ainsi de diminuer de façon importante l'autorité du pilote sur le palonnier 31 et sur la manette de poussée 33, pour des vitesses d'avancement importantes, minimisant leurs actions sur le comportement de l'hélicoptère hybride 20. En conséquence, le vol de l'hélicoptère hybride 20 peut se dérouler de façon plus sûre, grâce à l'utilisation du système de commande de vol adaptative 1.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Système de commande de vol adaptative (1) pour aéronef (20) destiné à modifier un gain appliqué à une valeur de recopie de ladite commande de vol, ledit système de commande de vol adaptative (1) comportant
- un moyen de commande (2) fournissant un ordre de commande de vol par un premier déplacement dudit moyen de commande (2),
- un organe de pilotage (5) destiné à commander un organe de vol (27) dudit aéronef (20),
- un moyen de pilotage (3) comportant une bielle de commande (7) et appliquant un gain de commande afin de transformer ledit ordre de commande de vol en une consigne de commande de vol et transmettant ladite consigne de commande de vol à un moyen d'action (4) par l'intermédiaire d'un deuxième déplacement de ladite bielle de commande (7),
- ledit moyen d'action (4) transformant ladite consigne de commande de vol en une action de commande de vol et appliquant ladite action de commande de vol audit organe de pilotage (5), et
- un moyen de retour d'information (6), fournissant audit moyen de pilotage (3) une valeur de recopie de ladite commande de vol, ladite valeur de recopie étant la valeur courante de ladite commande de vol réellement appliquée par ledit organe de vol (27),
ledit moyen de retour d'information (6) appliquant un gain de recopie variable à ladite valeur de recopie de ladite commande de vol, ledit gain de recopie étant variable en fonction de ladite valeur de recopie de ladite commande de vol,
**caractérisé en ce que** ledit moyen de retour d'information (6) comporte un moyen de transfert (11) et une bielle de transfert (13) appliquant ledit gain de recopie à ladite valeur de recopie de ladite commande de vol, ledit moyen de transfert (11) étant lié audit organe de pilotage (5) par une première liaison mécanique possédant au moins un degré de liberté, ledit organe de pilotage (5) provoquant un troisième déplacement dudit moyen de transfert (11) pouvant entraîner un quatrième déplacement de ladite bielle de transfert (13).

2. Système de commande de vol adaptative (1) selon la revendication 1,
**caractérisé en ce que** ledit moyen de transfert (11) est muni d'une rainure (12) et ladite bielle de transfert (13) est munie d'un pion (14) situé dans ladite rainure (12), ledit troisième déplacement dudit moyen de transfert (11) entraînant un déplacement dudit pion (14) dans ladite rainure (12) et, par suite, pouvant entraîner ledit quatrième déplacement de ladite bielle de transfert (13), ledit déplacement dudit pion (14) dans ladite rainure (12) pouvant entraîner une variation dudit gain de recopie.

3. Système de commande de vol adaptative (1) selon l'une quelconque des revendications 1 ou 2, **caractérisé en ce que** ledit moyen de transfert (11) possède uniquement une capacité de mouvement en translation.

4. Système de commande de vol adaptative (1) selon l'une quelconque des revendications 1 à 3,
**caractérisé en ce que** ledit moyen de pilotage (3) applique audit ordre de commande de vol un gain de commande variable en fonction de ladite valeur de recopie de ladite commande de vol.

5. Système de commande de vol adaptative (1) selon la revendication 4,
**caractérisé en ce que** ledit moyen de pilotage (3) comporte un premier étrier (15) lié audit moyen de retour d'information (6) et un second étrier (16) lié audit premier étrier (15), audit moyen de commande (2) et à ladite bielle de commande (7), ledit moyen de retour d'information (6) entraînant un cinquième déplacement dudit premier étrier (15), ledit cinquième déplacement dudit premier étrier (15) entraînant un sixième déplacement dudit second étrier (16) et modifiant ainsi ledit gain de commande appliqué audit ordre de commande de vol.

6. Système de commande de vol adaptative (1) selon la revendication 4,
**caractérisé en ce que**, ledit moyen de pilotage (3) comporte un premier étrier (15) lié à ladite bielle de transfert (13) et un second étrier (16) lié audit premier étrier (15), audit moyen de commande (2) et à ladite bielle de commande (7), ledit quatrième déplacement de ladite bielle de transfert (13) entraînant un cinquième déplacement dudit premier étrier (15), ledit cinquième déplacement dudit premier étrier (15) entraînant un sixième déplacement dudit second étrier (16) et modifiant ainsi ledit gain de commande appliqué audit ordre de commande de vol.

7. Système de commande de vol adaptative (1) selon la revendication 6,
**caractérisé en ce que** ladite bielle de transfert (13) est solidaire dudit premier étrier (15), ledit quatrième déplacement de ladite bielle de transfert (13) et ledit cinquième déplacement dudit premier étrier (15) étant une rotation autour d'un axe de rotation (AA).

8. Système de commande de vol adaptative (1) selon l'une quelconque des revendications 5 à 7,
**caractérisé en ce que** ledit second étrier (16) est lié audit premier étrier (15) par une première liaison pivot (17), ledit cinquième déplacement dudit premier étrier (15) entraînant un déplacement de ladite première liaison pivot (17).

9. Système de commande de vol adaptative (1) selon l'une quelconque des revendications 5 à 8,
**caractérisé en ce que** ledit moyen de commande (2) est lié audit second étrier (16) par une seconde liaison pivot (18) et ledit premier déplacement dudit moyen de commande (2) entraîne une rotation dudit second étrier (16) autour de ladite première liaison pivot (17) en fonction dudit ordre de commande de vol.

10. Système de commande de vol adaptative (1) selon l'une quelconque des revendications 1 à 9,
**caractérisé en ce que** ledit moyen de retour d'information (6) est situé à l'intérieur d'une zone lubrifiée de façon permanente.

11. Système de transmission de puissance d'une hélice propulsive (40) comportant un système de commande de vol adaptative (1) et une boîte de transmission de puissance d'une hélice propulsive (41),
**caractérisé en ce que** ledit système de commande de vol adaptative (1) est selon l'une quelconque des revendications 1 à 10.

12. Système de transmission de puissance d'une hélice propulsive (40) selon la revendication 11,
**caractérisé en ce que** ledit moyen de retour d'information (6) est situé à l'intérieur de ladite boîte de transmission de puissance d'une hélice propulsive (41) afin que ledit moyen de retour d'information (6) soit lubrifié de façon permanente.

13. Aéronef (20) comportant au moins un organe de vol (27) ainsi qu'au moins une commande de vol (31,33) et au moins une chaîne cinématique mécanique (32,34) de commande de vol afin de piloter ledit organe de vol (27),
**caractérisé en ce que** ledit aéronef (20) comporte au moins un système de transmission de puissance d'une hélice propulsive (40) selon l'une quelconque des revendications 11 à 12 positionné entre une chaîne cinématique mécanique (32,34) de commande de vol et ledit organe de vol (27).

14. Aéronef (20) selon la revendication 13,
**caractérisé en ce que** ledit aéronef (20) est un aéronef à voilure tournante comportant un fuselage (21), au moins un rotor principal (22) muni de premières pales (23) et au moins deux hélices propulsives (25) positionnées de part et d'autre dudit fuselage (21) et munies de secondes pales (26), chaque système de transmission de puissance d'une hélice propulsive (40) étant positionné entre lesdites chaînes cinématiques mécaniques (32,34) de commande du pas desdites secondes pales (26) desdites hélices propulsives (25) et lesdites hélices propulsives (25).

15. Aéronef (20) selon la revendication 14,
**caractérisé en ce qu'**une première commande de vol est un palonnier (31) de commande de vol en lacet dudit aéronef (20) commandant de façon différentielle ledit pas desdites secondes pales (26) desdites hélices propulsives (25) et une seconde commande de vol est une manette de poussée (33) desdites hélices propulsives (25) commandant de façon identique ledit pas desdites secondes pales (26) desdites hélices propulsives (25), lesdites première et seconde commandes de vol agissant de façon conjointe sur lesdits moyens de commande (2) du système de commande de vol adaptative (1) de chaque système de transmission de puissance d'une hélice propulsive (40).

## Patentansprüche

1. Adaptives Flugsteuerungssystem (1) für ein Luftfahrzeug (20) zum Modifizieren einer Verstärkung, die auf einen Kopierwert der Flugsteuerung angewendet wird, wobei das adaptive Flugsteuerungssystem (1) umfasst:
- eine Steuereinrichtung (2), die durch eine erste Verstellung der Steuereinrichtung (2) einen Flugsteuerbefehl liefert,
- ein Lenkorgan (5) zum Steuern eines Flugorgans (27) des Luftfahrzeugs (20),
- eine Lenkeinrichtung (3), die eine Steuerstange (7) aufweist und eine Steuerverstärkung anwendet, um den Flugsteuerbefehl in einen Flugsteuersollwert umzuwandeln, und die den Flugsteuersollwert durch eine zweite Verstellung der Steuerstange (7) an eine Wirkeinrichtung (4) überträgt,
- wobei die Wirkeinrichtung (4) den Flugsteuersollwert in eine Flugsteuerungsaktion umwandelt und die Flugsteuerungsaktion auf das Lenkorgan (5) anwendet, und
- eine Rückkopplungseinrichtung (6), die der Lenkeinrichtung (3) einen Kopierwert der Flugsteuerung zur Verfügung stellt, wobei der Kopierwert der aktuelle Wert der Flugsteuerung ist, der tatsächlich von dem Flugorgan (27) angewendet wird,
wobei die Rückkopplungseinrichtung (6) eine variable Kopierverstärkung auf den Kopierwert der Flugsteuerung anwendet, wobei die Kopierverstärkung als Funktion des Kopierwertes der Flugsteuerung variabel ist,
**dadurch gekennzeichnet, dass** die Rückkopplungseinrichtung (6) eine Übertragungseinrichtung (11) und eine Übertragungsstange (13) umfasst, die die Kopierverstärkung auf den Kopierwert der Flugsteuerung anwendet, wobei die Übertragungseinrichtung (11) mit dem Lenkorgan (5) durch eine erste mechanische Verbindung mit mindestens einem Freiheitsgrad verbunden ist, wobei das Lenkorgan (5) eine dritte Verstellung der Übertragungseinrichtung (11) bewirkt, die eine vierte Verstellung der Übertragungsstange (13) bewirken kann.

2. Adaptives Flugsteuerungssystem (1) nach Anspruch 1,
**dadurch gekennzeichnet, dass** die Übertragungseinrichtung (11) mit einer Nut (12) versehen ist und die Übertragungsstange (13) mit einem Stift (14) versehen ist, der sich in der Nut (12) befindet, wobei die dritte Verstellung der Übertragungseinrichtung (11) eine Verstellung des Stiftes (14) in der Nut (12) bewirkt und somit die vierte Verstellung der Übertragungsstange (13) bewirken kann, wobei die Verstellung des Stiftes (14) in der Nut (12) eine Veränderung der Kopierverstärkung bewirken kann.

3. Adaptives Flugsteuerungssystem (1) nach einem der Ansprüche 1 oder 2,
**dadurch gekennzeichnet, dass** die Übertragungseinrichtung (11) nur eine Fähigkeit zur translatorischen Bewegung hat.

4. Adaptives Flugsteuerungssystem (1) nach einem der Ansprüche 1 bis 3,
**dadurch gekennzeichnet, daß** die Steuereinrichtung (3) auf den Flugsteuerbefehl eine Steuerverstärkung anwendet, die in Abhängigkeit von dem Kopierwert der Flugsteuerung variabel ist.

5. Adaptives Flugsteuerungssystem (1) nach Anspruch 4,
**dadurch gekennzeichnet, dass** die Lenkeinrichtung (3) einen ersten Bügel (15), der mit der Rückkopplungseinrichtung (6) verbunden ist, und einen zweiten Bügel (16) umfasst, der mit dem ersten Bügel (15), der Steuereinrichtung (2) und der Steuerstange (7) verbunden ist, wobei die Rückkopplungseinrichtung (6) eine fünfte Verstellung des ersten Bügels (15) bewirkt, wobei die fünfte Verstellung des ersten Bügels (15) eine sechste Verstellung des zweiten Bügels (16) bewirkt und somit die auf den Flugsteuerbefehl angewandte Steuerverstärkung modifiziert.

6. Adaptives Flugsteuerungssystem (1) nach Anspruch 4,
**dadurch gekennzeichnet, dass** die Lenkeinrichtung (3) einen ersten Bügel (15), der mit der Übertragungsstange (13) verbunden ist, und einen zweiten Bügel (16) umfasst, der mit dem ersten Bügel (15), der Steuereinrichtung (2) und der Steuerstange (7) verbunden ist, wobei die vierte Verstellung der Übertragungsstange (13) eine fünfte Verstellung des ersten Bügels (15) bewirkt, wobei die fünfte Verstellung des ersten Bügels (15) eine sechste Verstellung des zweiten Bügels (16) bewirkt und somit die auf den Flugsteuerbefehl angewandte Steuerverstärkung modifiziert.

7. Adaptives Flugsteuerungssystem (1) nach Anspruch 6,
**dadurch gekennzeichnet, dass** die Übertragungsstange (13) einstückig mit dem ersten Bügel (15) ist, und dass die vierte Verstellung der Übertragungsstange (13) und die fünfte Verstellung des ersten Bügels (15) eine Drehung um die gleiche Drehachse (AA) sind.

8. Adaptives Flugsteuerungssystem (1) nach einem der Ansprüche 5 bis 7,
**dadurch gekennzeichnet, dass** der zweite Bügel (16) mit dem ersten Bügel (15) durch eine erste Schwenkverbindung (17) verbunden ist, wobei die fünfte Verstellung des ersten Bügels (15) eine Bewegung der ersten Schwenkverbindung (17) antreibt.

9. Adaptives Flugsteuerungssystem (1) nach einem der Ansprüche 5 bis 8,
**dadurch gekennzeichnet, dass** die Steuereinrichtung (2) mit dem zweiten Bügel (16) durch eine zweite Schwenkverbindung (18) verbunden ist und die erste Verstellung der Steuereinrichtung (2) eine Drehung des zweiten Bügels (16) um die erste Schwenkverbindung (17) in Abhängigkeit von dem Flugsteuerbefehl bewirkt.

10. Adaptives Flugsteuerungssystem (1) nach einem der Ansprüche 1 bis 9,
**dadurch gekennzeichnet, dass** sich die Rückkopplungseinrichtung (6) innerhalb eines permanent geschmierten Bereichs befindet.

11. Propeller-Leistungsübertragungssystem (40) mit einem adaptiven Flugsteuerungssystem (1) und einem Propeller-Leistungsübertragungsgetriebe (41),
**dadurch gekennzeichnet, dass** das adaptive Flugsteuerungssystem (1) gemäß einem der Ansprüche 1 bis 10 ist.

12. Leistungsübertragungssystem eines Propellers (40) nach Anspruch 11,
**dadurch gekennzeichnet, dass** die Rückkopplungseinrichtung (6) innerhalb des Leistungsübertragungsgetriebes eines Propellers (41) angeordnet ist, so dass die Rückkopplungseinrichtung (6) permanent geschmiert ist.

13. Luftfahrzeug (20) mit mindestens einem Flugorgan (27) sowie mindestens einer Flugsteuerung (31, 33) und mindestens einer mechanischen Flugsteuerkinematikkette (32, 34) zum Lenken des Flugorgans (27),
**dadurch gekennzeichnet, dass** das Luftfahrzeug (20) mindestens ein Leistungsübertragungssystem für einen Propeller (40) nach einem der Ansprüche 11 bis 12 umfasst, das zwischen einer mechanischen Flugsteuerkinematikkette (32, 34) und dem Flugorgan (27) angeordnet ist.

14. Luftfahrzeug (20) nach Anspruch 13,
**dadurch gekennzeichnet, dass** das Luftfahrzeug (20) ein Drehflügelflugzeug ist, das einen Rumpf (21), mindestens einen Hauptrotor (22), der mit ersten Blättern (23) ausgestattet ist, und mindestens zwei Antriebspropeller (25), die auf beiden Seiten des Rumpfes (21) angeordnet und mit zweiten Blättern (26) ausgestattet sind, umfasst, wobei jedes Leistungsübertragungssystem eines Propellers (40) zwischen den mechanischen kinematischen Ketten (32, 34) zur Steuerung der Steigung der zweiten Blätter (26) der Propeller (25) und den Propellern (25) angeordnet ist.

15. Luftfahrzeug (20) nach Anspruch 14,
**dadurch gekennzeichnet, dass** eine erste Flugsteuerung ein Gierflug-Steuerruder (31) des Luftfahrzeugs (20) ist, das die Steigung der zweiten Blätter (26) der Propeller (25) differenziell steuert, und eine zweite Flugsteuerung ein Schubhebel (33) der Propeller (25) ist, der die Steigung der zweiten Blätter (26) der Propeller (25) identisch steuert,
wobei die erste und die zweite Flugsteuerung gemeinsam auf die Steuereinrichtungen (2) des adaptiven Flugsteuerungssystems (1) jedes Leistungsübertragungssystems eines Propellers (40) wirken.

## Claims

1. Adaptive flight control system (1) for an aircraft (20) which is intended to modify a gain applied to a copy value of the flight control, the adaptive flight control system (1) comprising
- a control means (2) which provides a flight control instruction via a first movement of the control means (2),
- a control member (5) which is intended to control a flight member (27) of the aircraft (20),
- a control means (3) which comprises a control rod (7) and which applies a control gain in order to convert the flight control instruction into a mandatory flight control instruction and which transmits the mandatory flight control instruction to an action means (4) via a second movement of the control rod (7),
- the action means (4) converting the mandatory flight control instruction into a flight control action and applying the flight control action to the control member (5), and
- an information return means (6) providing the control means (3) with a copy value of the flight control, the copy value being the current value of the flight control which is actually applied by the flight member (27),
the information return means (6) applying a variable copy gain to the copy value of the flight control, the copy gain being variable in accordance with the copy value of the flight control,
**characterised in that** the information return means (6) comprises a transfer means (11) and a transfer rod (13) which applies the copy gain to the copy value of the flight control, the transfer means (11) being connected to the control member (5) via a first mechanical connection which has at least one degree of freedom, the control member (5) bringing about a third movement of the transfer means (11) which may bring about a fourth movement of the transfer rod (13).

2. Adaptive flight control system (1) according to claim 1,
**characterised in that** the transfer means (11) is provided with a groove (12) and the transfer rod (13) is provided with a pin (14) which is located in the groove (12), the third movement of the transfer means (11) bringing about a movement of the pin (14) in the groove (12) and, subsequently, being able to bring about the fourth movement of the transfer rod (13), the movement of the pin (14) in the groove (12) being able to bring about a variation of the copy gain.

3. Adaptive flight control system (1) according to either claim 1 or claim 2,
**characterised in that** the transfer means (11) has only a capacity for translational movement.

4. Adaptive flight control system (1) according to any one of claims 1 to 3,
**characterised in that** the control means (3) applies to the flight control instruction a control gain which is variable in accordance with the copy value of the flight control.

5. Adaptive flight control system (1) according to claim 4,
**characterised in that** the control means (3) comprises a first bracket (15) which is connected to the information return means (6) and a second bracket (16) which is connected to the first bracket (15), to the control means (2) and to the control rod (7), the information return means (6) bringing about a fifth movement of the first bracket (15), the fifth movement of the first bracket (15) bringing about a sixth movement of the second bracket (16) and thus modifying the control gain applied to the flight control instruction.

6. Adaptive flight control system (1) according to claim 4,
**characterised in that** the control means (3) comprises a first bracket (15) which is connected to the transfer rod (13) and a second bracket (16) which is connected to the first bracket (15), to the control means (2) and to the control rod (7), the fourth movement of the transfer rod (13) bringing about a fifth movement of the first bracket (15), the fifth movement of the first bracket (15) bringing about a sixth movement of the second bracket (16) and thus modifying the control gain applied to the flight control instruction.

7. Adaptive flight control system (1) according to claim 6,
**characterised in that** the transfer rod (13) is fixedly joined to the first bracket (15), the fourth movement of the transfer rod (13) and the fifth movement of the first bracket (15) being a rotation about a rotation axis (AA).

8. Adaptive flight control system (1) according to any one of claims 5 to 7,
**characterised in that** the second bracket (16) is connected to the first bracket (15) via a first pivot connection (17), the fifth movement of the first bracket (15) bringing about a movement of the first pivot connection (17).

9. Adaptive flight control system (1) according to any one of claims 5 to 8,
**characterised in that** the control means (2) is connected to the second bracket (16) via a second pivot connection (18) and the first movement of the control means (2) brings about a rotation of the second bracket (16) about the first pivot connection (17) in accordance with the flight control instruction.

10. Adaptive flight control system (1) according to any one of claims 1 to 9,
**characterised in that** the information return means (6) is located inside a zone which is lubricated in a permanent manner.

11. Power transmission system for a pusher propeller (40) comprising an adaptive flight control system (1) and a power transmission box of a pusher propeller (41),
**characterised in that** the adaptive flight control system (1) is in accordance with any one of claims 1 to 10.

12. Power transmission system of a pusher propeller (40) according to claim 11,
**characterised in that** the information return means (6) is located inside the power transmission box of a pusher propeller (41) so that the information return means (6) is lubricated in a permanent manner.

13. Aircraft (20) comprising at least one flight member (27) and at least one flight control (31, 33) and at least one mechanical kinematic flight control chain (32, 34) in order to control the flight member (27),
**characterised in that** the aircraft (20) comprises at least one power transmission system of a pusher propeller (40) according to either claim 11 or claim 12, positioned between a mechanical kinematic flight control chain (32, 34) and the flight member (27).

14. Aircraft (20) according to claim 13,
**characterised in that** the aircraft (20) is an aircraft with a rotary wing comprising a fuselage (21), at least one main rotor (22) which is provided with first blades (23) and at least two pusher propellers (25) which are positioned at one side and the other of the fuselage (21) and which are provided with second blades (26), each power transmission system of a pusher propeller (40) being positioned between the mechanical kinematic chains (32, 34) for controlling the pitch of the second blades (26) of the pusher propellers (25) and the pusher propellers (25).

15. Aircraft (20) according to claim 14,
**characterised in that** a first flight control is a yaw flight control rudder (31) of the aircraft (20), controlling in a differential manner the pitch of the second blades (26) of the pusher propellers (25) and a second flight control is a thrust handle (33) of the pusher propellers (25) which control in an identical manner the pitch of the second blades (26) of the pusher propellers (25), the first and second flight controls acting together on the control means (2) of the adaptive flight control system (1) of each power transmission system of a pusher propeller (40).
